# EUROPÄISCHE PATENTSCHRIFT

(11) **EP 2 171 914 B1**
(45) Veröffentlichungstag und Bekanntmachung des Hinweises auf die Patenterteilung: **19.02.2020**
(21) Anmeldenummer: 08748359.0
(22) Anmeldetag: 22.05.2008
(51) Int. Cl.: H04L 12/10, H04L 12/40

(54) **POWER MANAGEMENT**
POWER MANAGEMENT
GESTION DE PUISSANCE

(30) Priorität: 21.06.2007 CH 995072007
(43) Veröffentlichungstag der Anmeldung: 07.04.2010
(73) Patentinhaber: Landis+Gyr AG, 6301 Zug (CH)
(72) Erfinder: WASMER, Roland, CH-6048 Horw (CH)
(74) Vertreter: IPrime Rentsch Kaelin AG
(86) Internationale Anmeldenummer: PCT/CH2008/000229
(87) Internationale Veröffentlichungsnummer: WO 2008/154755

(56) Entgegenhaltungen:
- EP-A2- 0 749 070
- DE-A1- 19 639 644
- US-A1- 2004 153 680
- US-A1- 2005 136 989
- US-A1- 2006 143 583
- US-A1- 2007 136 614
- Anonymous: "Power over Ethernet - Wikipedia, the free encyclopedia", , 13 February 2007 (2007-02-13), XP55253487, Retrieved from the Internet: URL:http://web.archive.org/web/20070213193 608/http://en.wikipedia.org/wiki/Power_ove r_Ethernet [retrieved on 2016-02-26]

## Beschreibung

### FELD DER ERFINDUNG

Die vorliegende Erfindung bezieht sich auf das Gebiet der Datenübertragung. Sie betrifft ein Verfahren zum Betreiben eines Datennetzwerks gemäss dem Oberbegriff des Anspruchs 1 sowie ein Datennetzwerk zur Durchführung des Verfahrens.

### HINTERGRUND DER ERFINDUNG

Um die Verkabelung von über ein Ethernet netzwerkgebundenen Endgeräten zu vereinfachen, entstand der Wunsch, elektrische Speiseleistung über das Ethernet-Datenkabel zur Versorgung dieser Endgeräte zu führen. Typische Vertreter solcher Endgeräte sind Internet-Telefone (IP Phones), Drahtlosnetzwerke (Wireless Access Points), sowie Geräte für die bargeldlose Zahlungsabwicklung (POS Terminals).

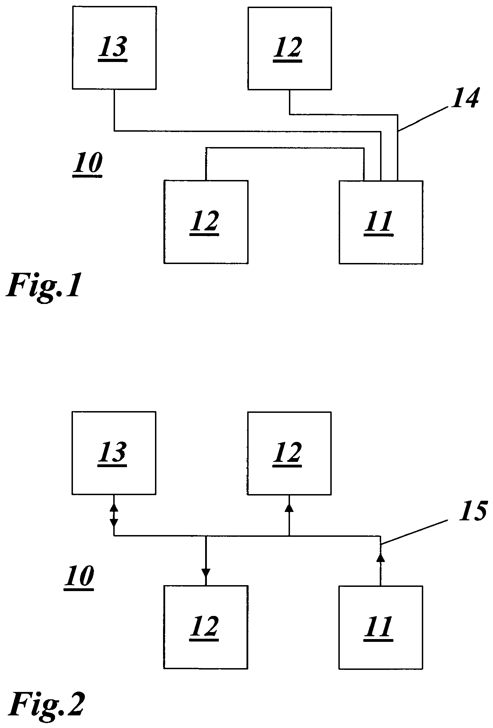

In Fig. 1 ist eine typische Anordnung für eine Datennetzwerk 10 wiedergegeben, bei dem mehrere Endgeräte 12 über die Datenkabel 14 eines Ethernets sternförmig mit einem Netzknoten (Switch) 11 vernetzt sind. Die Endgeräte 12 werden dabei über das Datenkabel 14 aus dem Netzknoten mit der notwendigen Speiseleistung gespeist.

Das Verfahren, Ethernet-Endgeräte über das Datenkabel zu speisen, wird im Allgemeinen PoE (Power-over-Ethernet) genannt (siehe z.B. die EP-A2-1 675 313). Das 8-adrige Ethernet-Kabel umfasst 4 üblicherweise verdrillte und voneinander getrennte Adernpaare, wobei nur 2 Adernpaare jeweils für die Datenkommunikation zu einem Endgerät genutzt werden. Nun gibt es verschiedene Ansätze, wie die Speiseleistung auf die einzelnen Adern bzw. Adernpaare eingespeist wird. Bevor unter der Bezeichnung IEEE 802.3af eine Normung verabschiedet wurde, entstanden viele herstellerspezifische Implementierungen von PoE, die meisten mit unterschiedlicher Adernbelegung, unterschiedlichen Spannungen und unterschiedlichen Polaritäten.

Der Hauptnachteil der nach IEEE 802.3af genormten Lösung ist, dass es eine klare Rollenaufteilung in "einspeisende Geräte" (PSE, Power Sourcing Equipment) und "Verbraucher" (PD, Powered Device) gibt. Weitere Nachteile sind der relativ hohe Aufwand in Hardware und/oder Software für die Energieverwaltung (Leistungsvereinbarung und -überwachung), sowie die festgelegten Leistungskategorien, für die der vorliegenden Erfindung zugrunde liegende Problemstellung ungeeignet sind.

Aus der eingangs genannten EP-A2-1 675 313 sind ein System und ein Verfahren bekannt, um nach einem vorgegebenen Schema ("power allocation policy") die von einem Netzknoten versorgten Endgeräte gemäss einer Prioriätseinteilung nicht mehr mit Energie zu versorgen, wenn die Leistung des Netzknotens für die Versorgung aller Endgeräte nicht mehr ausreicht. Dazu werden die Ausgänge des Netzknotens einzeln angesteuert, um die Versorgung des an den Ausgang angeschlossenen Endgerätes ggf. zu unterbinden. Hierfür ist ein sternförmiges Netz notwendig. Für eine Bus-Topologie bei der Versorgung ist diese Lösung nicht geeignet.

Aus der US-B2-7,081,827 ist ein aktiver Splitter für ein mit Prioritäten ausgestattetes PoE-Netzwerk bekannt, mit dessen Hilfe Leistung aus einer unterbrechungsfreien Stromversorgung je nach Priorität auf unterschiedliche Endgeräte verteilt werden kann. Auch hier ist ein sternförmiges Versorgungsnetz Voraussetzung.

Aus der US-A1-2007/0110360 sind ein System und ein Verfahren zur dynamischen Leistungszuordnung an PDs in einem PoE-Netzwerk bekannt, bei dem die einem PD zugeordnete Leistung mittels Kommunikation zwischen Leistungsquelle (PSE) und PD nach Massgabe der vom PD zu verrichtenden Aufgaben gesteuert wird. Hierfür ist ebenfalls ein sternförmiges Versorgungsnetz notwendig.

Aus der EP 0 749 070 A2 sind ein Verfahren zum dezentralen Speisen eines Busses und eine entsprechende Anordnung bekannt, wobei Busteilnehmer jeweils über eine ein- und abschaltbare Bus-Speisung, eine Strom-Messeinrichtung und eine Entscheidungs-Einrichtung verfügen, um zu verhindern, dass ein Überstrom über den Bus fließt.

### DARSTELLUNG DER ERFINDUNG

Der Erfindung liegt die Aufgabe zugrunde, mittels eines Verfahrens und einer Vorrichtung in ein stern- oder maschenförmig vernetztes Datennetz eine elektrische Versorgungsleistung in Form einer Bus-Topologie einzuspeisen zu können, und bei gesamthaft ungenügender Speiseleistung diejenigen Verbraucher zu bevorzugen, deren Funktion eine hohe Priorität hat. Die Bus-Topologie trägt dabei insbesondere dem Umstand Rechnung, dass einzelne Geräte im Netzwerk sich sowohl als speisende Geräte wie auch als Verbraucher verhalten können.

Die Aufgabe wird hinsichtlich des Verfahrens durch die Gesamtheit der Merkmale des Anspruchs 1 gelöst und hinsichtlich des Datennetzwerks durch die Gesamtheit der Merkmale des Anspruchs 8. Wesentlich für die Erfindung ist, dass in den Endgeräten eine Steuerung implementiert ist, dass die Endgeräte in Klassen mit unterschiedlich hoher Priorität eingeordnet werden, und dass beim Absinken des Spannungspegels unter den Nominalwert mit fallendem Spannungspegel durch die jeweilige Steuerung in den Endgeräten selbige Endgeräte in einer durch ihre Priorität gegebenen Reihenfolge abgeschaltet werden, wobei zuerst die Endgeräte mit der niedrigsten Priorität abgeschaltet werden und wobei die jeweilige Steuerung in den Endgeräten frei von weiterer Datenkommunikation zwischen einer Leistungsquelle und den Endgeräten ist und ferner frei ist von zusätzlichen Steuerungsmechanismen in der Leistungsquelle. Durch die Kopplung zwischen der Prioritätseinteilung und dem Spannungspegel wird eine stark vereinfachte Steuerung ermöglicht, die in den Endgeräten selbst implementiert werden kann und ohne weitere Datenkommunikation zwischen Leistungsquelle und Endgeräten und ohne zusätzliche Steuerungsmechanismen in der Leistungsquelle auskommt. Insbesondere kann das Datennetz auf einfache Weise erweitert werden, ohne dass im Netzknoten besondere Vorkehrungen für die Leistungszuteilung an die neuen Endgeräte getroffen werden müssen.

Eine Ausgestaltung des erfindungsgemässen Verfahrens ist dadurch gekennzeichnet, dass bei unterhalb des Nominalwertes liegendem, steigenden Spannungspegel der Speiseleistung die Endgeräte in einer durch ihre Priorität gegebenen Reihenfolge eingeschaltet werden, wobei zuerst die Endgeräte mit der höchsten Priorität eingeschaltet werden.

Vorzugsweise wird jedem der Endgeräte ein fester Spannungspegelwert zugeordnet, ab welchem es beim Absinken des Spannungspegels den Betrieb einstellt bzw. beim Ansteigen des Spannungspegels den Betrieb aufnimmt.

Besonders einfach ist es, wenn die Endgeräte den bei Ihnen anliegenden aktuellen Spannungspegel überwachen und den Betrieb einstellen, wenn der Spannungspegel den ihnen jeweils zugeordneten Spannungspegelwert unterschreitet bzw. den Betrieb aufnehmen, wenn der Spannungspegel den ihnen jeweils zugeordneten Spannungspegelwert überschreitet.

Eine andere Ausgestaltung der Erfindung zeichnet sich dadurch aus, dass die Endgeräte über ein Ethernet Daten austauschen, und dass die Endgeräte über einen Speisebus mit Speiseleistung versorgt werden, wobei zur Übertragung die zwei unbenutzten Adernpaare eines 8-adrigen Ethernetkabels verwendet werden. Die Verwendung der unbenutzten Adern bietet eine gute Störsicherheit gegenüber den Datenadern, vor allem in Hinsicht auf Sättigungseffekte in den Signalkopplern, welche durch Gleichströme, verursacht durch asymmetrische Leitungswiderstände, entstehen können.

Besonders günstig ist es, wenn wenigstens eines der Endgeräte mit einer internen Spannungsversorgung mit einer vorgegebenen Ausgangsspannung ausgestattet ist, welche kleiner ist als der nominale Spannungspegel, und die interne Spannungsversorgung zugeschaltet wird, wenn der Spannungspegel der Speiseleistung die Ausgangsspannung der internen Spannungsversorgung unterschreitet. Durch das Vorhandensein mehrerer Quellen für die Spannungsversorgung im Netzwerk ergibt sich eine Redundanz für einen sicheren Betrieb der Endgeräte.

Es hat sich dabei bewährt, wenn der nominale Spannungspegel ungefähr 48 V beträgt und die vorgegebene Ausgangsspannung der internen Spannungsversorgung bei etwa 45 V liegt.

Eine Ausgestaltung des Datennetzwerks nach der Erfindung ist dadurch gekennzeichnet, dass die Endgeräte derart ausgebildet sind, dass sie sich bei unterhalb des Nominalwertes liegendem, steigenden Spannungspegel der Speiseleistung in einer durch ihre Priorität gegebenen Reihenfolge einschalten, wobei sich zuerst die Endgeräte mit der höchsten Priorität einschalten.

Insbesondere werden die Endgeräte über einen Speisebus mit Speiseleistung versorgt, wobei zur Übertragung die zwei unbenutzten Adernpaare eines 8-adrigen Ethernetkabels verwendet werden.

Aus Gründen der Versorgungssicherheit ist es von Vorteil, wenn wenigstens eines der Endgeräte mit einer internen Spannungsversorgung mit einer vorgegebenen Ausgangsspannung ausgestattet ist, welche kleiner ist als der nominale Spannungspegel, und die interne Spannungsversorgung zuschaltbar ist, wenn der Spannungspegel der Speiseleistung die Ausgangsspannung der internen Spannungsversorgung unterschreitet.

Besonders vorteilhaft ist die erfindungsgemässe Lösung, wenn die Endgeräte Datenerfassungsgeräte, insbesondere Elektrizitätszähler und dazu gehörige Kommunikationsmodule, sowie Signalumformer, sind.

### KURZBESCHREIBUNG DER FIGUREN

Die Erfindung soll nachfolgend anhand von Ausführungsbeispielen im Zusammenhang mit den Zeichnungen näher erläutert werden. Es zeigen
- Fig. 1: eine typische Anordnung von über Ethernet-Datenkabel sternförmig vernetzten Endgeräten an einem Netzknoten;
- Fig. 2: dieselbe Anordnung von Endgeräten und Netzwerkkomponenten wie in Fig. 1, jedoch schematisch dargestellt mit einer busförmigen Verteilung der Speiseleistung, wobei sich der Netzknoten als reine Quelle für die Speiseleistung verhält, zwei der Endgeräte reine Verbraucher sind und ein Endgerät sowohl als Quelle als auch als Verbraucher arbeiten kann;
- Fig. 3a,b: zwei Arbeitsweisen des Datennetzwerks aus Fig. 2, wobei im einen Fall (Fig. 3a) das eine Endgerät als reiner Verbraucher arbeitet, und im anderen Fall (Fig. 3b) als Quelle für die Speiseleistung;
- Fig. 4a,b: ein zu Fig. 2 vergleichbares Datennetzwerk, bei dem die Endgeräte ausschliesslich Verbraucher sind, und bei dem bei abfallendem Spannungspegel zunächst ein Endgerät (Fig. 4a) und dann ein weiteres Endgerät (Fig. 4b) ihren Betrieb einstellen;
- Fig. 5: einen möglichen inneren Aufbau eines als reiner Verbraucher arbeitenden Endgerätes; und
- Fig. 6: einen möglichen inneren Aufbau eines als reiner Verbraucher arbeitenden Endgerätes.

### DETAILLIERTE BESCHREIBUNG BEVORZUGTER AUSFÜHRUNGSFORMEN

Die Erfindung wird bevorzugt in vernetzten Datenerfassungssystemen, insbesondere in modular aufgebauten und vernetzten Elektrizitätszähler-Messplätzen, eingesetzt.

Diese Anwendung erfordert robuste, gegen Umwelt- und Störeinflüsse unempfindliche Technologien, sowie die Voraussetzung, dass Installation, Wartung und Unterhalt von in der Informationstechnologie ungeschultem Personal durchgeführt werden kann.

Die Erfindung geht aus von einer typischen Datennetzwerk 10, wie es in Fig. 1 wiedergegeben ist. Innerhalb dieses Datennetzwerks 10 sind mehrere Endgeräte 12, 13 mit einem Netzknoten 11 über Datenkabel 14, insbesondere Ethernet-Datenkabel, sternförmig vernetzt. Eines der Endgeräte, das Endgerät 13, hat dabei anders als die anderen Endgeräte 12 nicht nur die Funktion als Leistungsverbraucher, sonder auch als Leistungsquelle. Fig. 2 zeigt dieselbe Anordnung von Endgeräten 12, 13 und Netzwerkkomponenten (11) mit einem Speisebus 15 zur busförmigen Verteilung der Speiseleistung. Im vorliegenden Fall verhält sich der Netzknoten 11 als reine Quelle für die Speiseleistung, während die Endgeräte 12 reine Verbraucher sind. Das Endgerät 13 dagegen kann sowohl als Quelle als auch als Verbraucher arbeiten (angedeutet durch den Doppelpfeil in Fig. 2).

Innerhalb des Speisebus 15 werden Ethernet-Datenkabel eingesetzt. Die 8-adrigen Ethernet-Datenkabel umfassen 4 Adernpaare, von denen nur 2 Adernpaare jeweils zur Datenkommunikation mit einem Endgerät benutzt werden. Die Speisespannung wird im Speisebus 15 auf die unbenutzten Adernpaare 4/5 und 7/8 eingespeist, wobei das positive Potential auf dem Adernpaar 4/5 liegt. Diese Verwendung der unbenutzten Adern bietet eine gute Störsicherheit gegenüber den Datenadern, vor allem in Hinsicht auf Sättigungseffekte in den Signalkopplern, welche durch Gleichströme, verursacht durch asymmetrische Leitungswiderstände, entstehen könnten.

Als zulässiger Speisespannungsbereich wird ein Bereich von 20 V bis 48 V gewählt, wobei die nominale Spannung bei 48 V liegt.

Gemäss der Erfindung werden nun im Datennetzwerk 10 Endgeräte 12, 13 bzw. Verbraucher in Klassen unterschiedlicher Priorität eingeteilt und bei abfallender Speiseleistung je nach ihrer Priorität unterschiedlich behandelt. Bei gesamthaft ungenügender Speiseleistung aus dem Netzknoten 11 werden diejenigen Verbraucher bevorzugt, deren Funktion eine hohe Priorität hat. Die Bevorzugung von Verbrauchern mit hoher Priorität wird dadurch erreicht, dass den Verbrauchern unterschiedliche Spannungspegel zugeordnet werden, bei denen die angeschlossenen Geräte ihre Funktion aufnehmen. Verbraucher mit hoher Priorität arbeiten bereits mit geringerer Speisespannung. Dies bewirkt, dass die Verbraucher mit hoher Priorität beim Anstieg der Spannung früher ihren Betrieb aufnehmen und beim Absinken der Spannung länger ihren Betrieb aufrechterhalten.

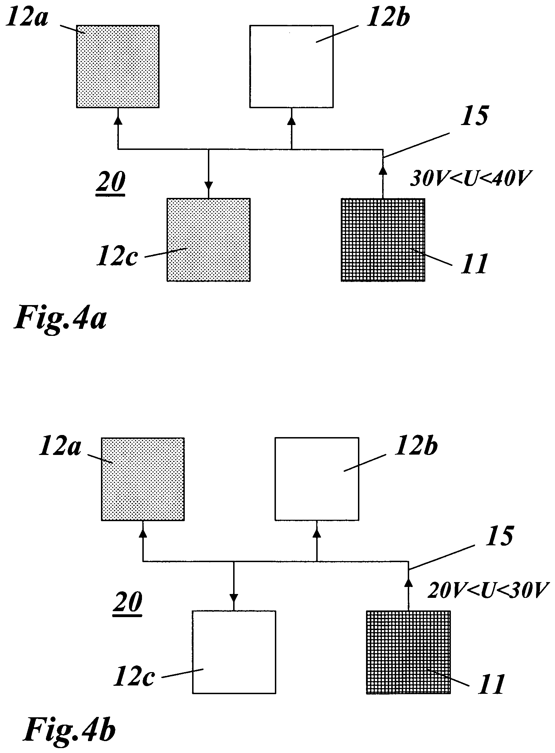

Dies kann anhand der Fig. 4a und 4b deutlich gemacht werden: In diesem Fall werden beispielhaft drei gleichartige Endgeräte 12a, 12b und 12c über den Speisebus 15 von Netzknoten 11 mit Speiseleistung versorgt, wobei der nominale Spannungspegel 48 V beträgt und die Endgeräte 12a, 12b und 12c unterschiedliche Priorität geniessen, die sich in den ihnen zugeordneten Spannungspegeln 20 V (Endgerät 12a), 30 V (Endgerät 12c) und 40 V (Endgerät 12b) ausdrückt. Wenn der Spannungspegel des Netzknotens 11 in einen Bereich zwischen 30 V und 40 V absinkt (Fig. 4a) stellt das Endgerät 12b mit dem höchsten zugeordneten Spannungspegel (40 V) und damit der niedrigsten Priorität als erstes den Betrieb ein. Dies ist in Fig. 4a durch die fehlende Schraffur beim Endgerät 12b angedeutet. Sinkt der Spannungspegel des Netzknotens 11 weiter in den Bereich zwischen 20 V und 30 V (Fig. 4b), stellt das Endgerät 12c mit dem zugehörigen Spannungspegel von 30 V und der nächst-niedrigen Priorität den Betrieb ein. In Betrieb bleibt dagegen das Endgerät 12a mit der höchsten Priorität und dem niedrigsten zugeordneten Spannungspegel von 20 V. Steigt der Spannungspegel im Speisebus 15 wieder, schalten sich die Endgeräte in umgekehrter Reihenfolge wieder zu. Die hier angenommenen Spannungspegel sind dabei nur als Beispiele zu verstehen. Ihre Grösse und Abstufung kann durchaus auch anders gewählt werden.

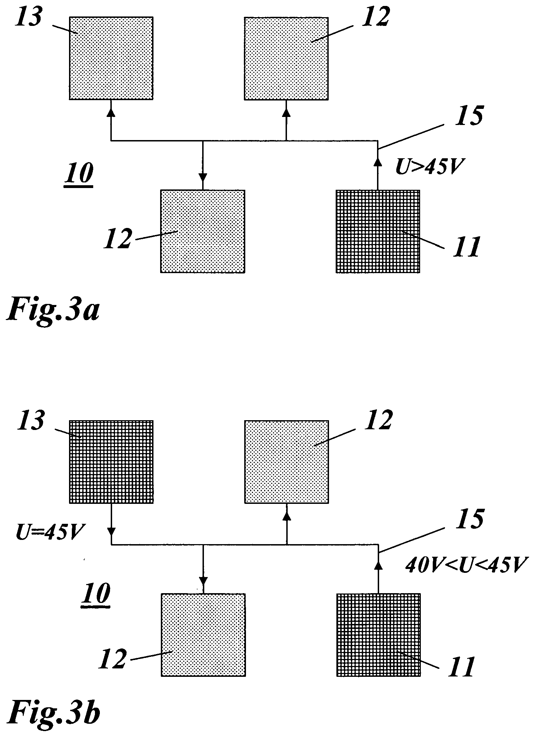

Fig. 3a und 3b zeigen einen andern Fall gemäss Fig. 1 und 2, bei dem wenigstens eines der Endgeräte, nämlich das Endgerät 13, sowohl Quelle als auch Verbraucher der Speiseleistung sein kann. Für diejenigen Endgeräte, welche sowohl Quelle als auch Verbraucher sein können, geschieht die Umschaltung ebenfalls über den Spannungspegel auf dem Speisebus. Die Ausgangsspannung dieser Geräte in der Betriebsart "Quelle" beträgt geringfügig weniger als die nominale Spannung. Gewählt wurden beispielsweise 45 V. Ist die von aussen zugeführte Speisespannung (mit z.B. 48 V) grösser als diese Ausgangsspannung, so wird der Speisestrom des Geräts von der höheren Spannung bezogen, also von der von aussen zugeführten Speisespannung (Fig. 3a). Das Endgerät 13 ist dann ein einfacher Verbraucher wie die anderen Endgeräte 12 auch. Sinkt der Spannungspegel des Netzknotens 11 unter die 45 V, schaltet das Endgerät 13 um und speist selbst Leistung in den Speisebus 15 ein (Fig. 3b). Auf diese Weise wird zusätzlich eine Redundanz in der Versorgung des Datennetzwerks erzielt.

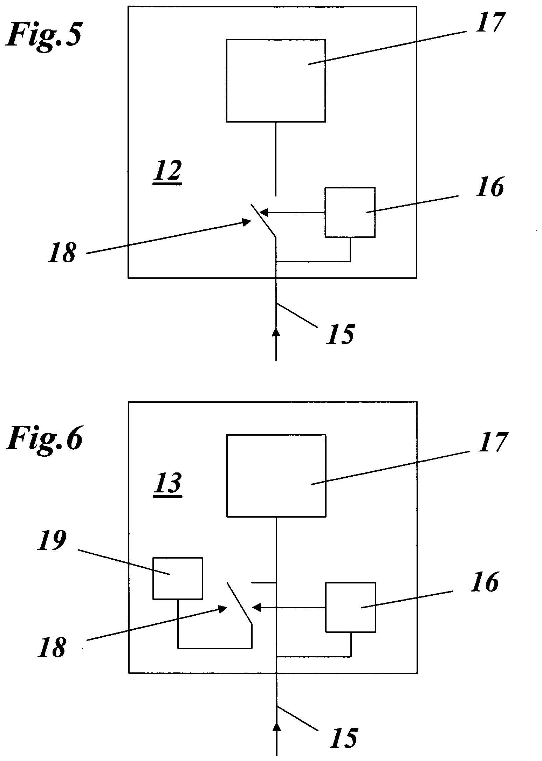

Zur Verwirklichung des Netzbetriebs mit Funktionspriorität können die rein verbrauchenden Endgeräte 12 den in Fig. 5 dargestellten beispielhaften Aufbau haben: Die im Endgerät 12 vorhandene datenverarbeitende Schaltung 17 ist über einen Schalter 18 an den Speisebus 15 angeschlossen. Der Spannungspegel auf den Speisebus 15 wird von einem Pegeldetektor 16 überwacht, der beim Unterschreiten eines vorgegebenen Spannungspegelwertes den Schalter 18 öffnet bzw. beim Überschreiten des Spannungspegelwertes wieder schliesst.

Die Endgeräte 13, die wahlweise als Verbraucher oder Quelle arbeiten, können den in Fig. 6 wiedergegebenen beispielhaften Aufbau haben: Die im Endgerät 13 vorhandene datenverarbeitende Schaltung 17 ist direkt an den Speisebus 15 angeschlossen. Eine zusätzliche interne Spannungsversorgung 19 kann über einen Schalter 18 an den Speisebus 15 angeschlossen werden. Der Spannungspegel auf den Speisebus 15 wird von einem Pegeldetektor 16 überwacht, der beim Unterschreiten eines vorgegebenen Spannungspegelwertes den Schalter 18 schliesst bzw. beim Überschreiten des Spannungspegelwertes wieder öffnet. Auf diese Weise gelangt im Bedarfsfall zusätzliche Speiseleistung auf den Speisebus 15 und sichert auch die Versorgung anderer Endgeräte.

Da die Spannungspegel auf dem Speisebus 15 zur Steuerung des prioritäts-bestimmten Betriebes der Endgeräte herangezogen werden, ergibt sich eine besonders einfache Steuerung, die auf einen Datenaustausch verzichten kann und eine Veränderung der Netzstruktur bzw. der Zahl der Endgeräte jederzeit ohne Schwierigkeiten zulässt.

Ohne den Erfindungsgedanken zu verlassen ist ebenfalls denkbar, dass in einem Netzwerk mit mehreren Netzknoten (Switches) eine Bus-Topologie aufgebrochen wird, beispielsweise, indem zwei Netzknoten untereinander nur über die Datenleitungen kommunizieren, hingegen speisungsseitig unabhängig verbleiben. Dies ist dann von besonderem Vorteil, wenn bei einem Kurzschluss auf dem Versorgungsbus alle angeschlossenen Geräte ohne eigene Speisung betroffen wären; das Aufbrechen der Bus-Topologie stellt im Kurzschlussfall eine einfache Abhilfe dar.

### BEZUGSZEICHEN

- 10,20: Datennetzwerk
- 11: Netzknoten (Switch)
- 12,12a,b,c: Endgerät (Verbraucher)
- 13: Endgerät (Quelle/Verbraucher)
- 14: Datenkabel (z.B. Ethernet)
- 15: Speisebus
- 16: Pegeldetektor
- 17: datenverarbeitende Schaltung
- 18: Schalter
- 19: interne Spannungsversorgung

## Patentansprüche

1. Verfahren zum Betreiben eines Datennetzwerks (10, 20), welches eine Mehrzahl von Endgeräten (12, 12a,b,c, 13) umfasst, die untereinander Daten austauschen und von wenigstens einem Netzknoten (11) und/oder wenigstens einem der Endgeräte (13) mit Speiseleistung auf einem vorgegebenen nominalen Spannungspegel versorgt werden, **dadurch gekennzeichnet, dass** in den Endgeräten (12, 12a,b,c, 13) eine Steuerung implementiert ist, dass die Endgeräte (12, 1 2a,b,c, 13) in Klassen mit unterschiedlich hoher Priorität eingeordnet werden, und dass beim Absinken des Spannungspegels unter den Nominalwert mit fallendem Spannungspegel durch die jeweilige Steuerung in den Endgeräten (12, 12a,b,c, 13) selbige Endgeräte (12, 12a,b,c, 13) in einer durch ihre Priorität gegebenen Reihenfolge abgeschaltet werden, wobei zuerst die Endgeräte mit der niedrigsten Priorität ausgeschaltet werden und wobei die jeweilige Steuerung in den Endgeräten (12, 12a,b,c, 13) frei von weiterer Datenkommunikation zwischen einer Leistungsquelle und den Endgeräten (12, 1 2a,b,c, 13) ist und ferner frei ist von zusätzlichen Steuerungsmechanismen in der Leistungsquelle.

2. Verfahren nach Anspruch 1, **dadurch gekennzeichnet, dass** bei unterhalb des Nominalwertes liegendem, steigenden Spannungspegel der Speiseleistung die Endgeräte (12, 12a,b,c, 13) in einer durch ihre Priorität gegebenen Reihenfolge eingeschaltet werden, wobei zuerst die Endgeräte mit der höchsten Priorität eingeschaltet werden.

3. Verfahren nach Anspruch 1 oder 2, **dadurch gekennzeichnet, dass** jedem der Endgeräte (12, 1 2a,b,c, 13) ein fester Spannungspegelwert zugeordnet wird, ab welchem es beim Absinken des Spannungspegels den Betrieb einstellt bzw. beim Ansteigen des Spannungspegels den Betrieb aufnimmt.

4. Verfahren nach Anspruch 3, **dadurch gekennzeichnet, dass** die Endgeräte (12, 12a,b,c, 13) den bei Ihnen anliegenden aktuellen Spannungspegel überwachen und den Betrieb einstellen, wenn der Spannungspegel den ihnen jeweils zugeordneten Spannungspegelwert unterschreitet bzw. den Betrieb aufnehmen, wenn der Spannungspegel den ihnen jeweils zugeordneten Spannungspegelwert überschreitet.

5. Verfahren nach einem der Ansprüche 1 bis 4, **dadurch gekennzeichnet, dass** die Endgeräte (12, 12a,b,c, 13) über ein Ethernet Daten austauschen, und dass die Endgeräte (12, 12a,b,c, 13) über einen Speisebus (15) mit Speiseleistung versorgt werden, wobei zur Übertragung die zwei unbenutzten Adernpaare eines 8-adrigen Ethernetkabels (14) verwendet werden.

6. Verfahren nach Anspruch 5, **dadurch gekennzeichnet, dass** wenigstens eines der Endgeräte (13) mit einer internen Spannungsversorgung (19) mit einer vorgegebenen Ausgangsspannung ausgestattet ist, welche kleiner ist als der nominale Spannungspegel, und dass die interne Spannungsversorgung (19) zugeschaltet wird, wenn der Spannungspegel der Speiseleistung die Ausgangsspannung der internen Spannungsversorgung (19) unterschreitet.

7. Verfahren nach Anspruch 6, **dadurch gekennzeichnet, dass** der nominale Spannungspegel ungefähr 48 V beträgt und die vorgegebene Ausgangsspannung der internen Spannungsversorgung bei etwa 45 V liegt.

8. Datennetzwerk zur Durchführung des Verfahrens nach einem der Ansprüche 1 bis 7, welches Datennetzwerk (10, 20) eine Mehrzahl von Endgeräten (12, 12a,b,c, 13) umfasst, die über ein stern- oder maschenförmig vernetztes Datennetz, insbesondere ein Ethernet, untereinander Daten austauschen, sowie wenigstens einen Netzknoten (11) und/oder mindestens eines der Endgeräte (13), der, bzw. das die Endgeräte (12, 12a,b,c, 13) über das Datennetz mit Speiseleistung auf einem vorgegebenen nominalen Spannungspegel versorgt, **dadurch gekennzeichnet, dass** in den Endgeräten (12, 12a,b,c, 13) eine Steuerung (16) implementiert ist, dass die Endgeräte (12, 12a,b,c, 13) in Klassen mit unterschiedlich hoher Priorität eingeordnet sind, und dass die Endgeräte (12, 12a,b,c, 13) derart ausgebildet sind, dass sie sich durch die jeweilige Steuerung in den Endgeräten (12, 12a,b,c, 13) beim Absinken des Spannungspegels unter den Nominalwert mit fallendem Spannungspegel in einer durch ihre Priorität gegebenen Reihenfolge abschalten, wobei sich zuerst die Endgeräte (12, 1 2a,b,c, 13) mit der niedrigsten Priorität abschalten.

9. Datennetzwerk nach Anspruch 8, **dadurch gekennzeichnet, dass** die Endgeräte (12, 12a,b,c, 13) derart ausgebildet sind, dass sie sich bei unterhalb des Nominalwertes liegendem, steigenden Spannungspegel der Speiseleistung in einer durch ihre Priorität gegebenen Reihenfolge einschalten, wobei sich zuerst die Endgeräte mit der höchsten Priorität einschalten.

10. Datennetzwerk nach Anspruch 8 oder 9, **dadurch gekennzeichnet, dass** die Endgeräte (12, 12a,b,c, 13) über einen Speisebus (15) mit Speiseleistung versorgt werden, wobei zur Übertragung die zwei unbenutzten Adernpaare eines 8-adrigen Ethernetkabels (14) verwendet werden.

11. Datennetzwerk nach einem der Ansprüche 8 bis 10, **dadurch gekennzeichnet, dass** wenigstens eines der Endgeräte (13) mit einer internen Spannungsversorgung (19) mit einer vorgegebenen Ausgangsspannung ausgestattet ist, welche kleiner ist als der nominale Spannungspegel, und dass die interne Spannungsversorgung (19) zuschaltbar ist, wenn der Spannungspegel der Speiseleistung die Ausgangsspannung der internen Spannungsversorgung (19) unterschreitet.

12. Datennetzwerk nach einem der Ansprüche 8 bis 11, **dadurch gekennzeichnet, dass** die Endgeräte (12, 12a,b,c, 13) Datenerfassungsgeräte, insbesondere Elektrizitätszähler, sind.

## Claims

1. Method for operating a data network (10, 20) comprising a plurality of terminals (12, 12a,b,c, 13) which exchange data among one another and are supplied with feed power at a predefined nominal voltage level by at least one network node (11) and/or at least one of the terminals (13), **characterized in that** a control (16) is implemented in the terminals (12, 12a,b,c, 13), **in that** the terminals (12, 12a,b,c, 13) are classified in classes having different priority levels, and **in that** in the case of the voltage level dropping below the nominal value with a falling voltage level by means of the respective control (16) in the terminals (12, 12a,b,c, 13), same terminals (12, 12a,b,c, 13) are turned off in an order given by their priority, wherein the terminals having the lowest priority are switched off first, and wherein the respective control (16) in the terminals (12, 12a,b,c, 13) is free of further data communication between a power source and the terminals (12, 12a,b,c, 13) and is furthermore free of additional control mechanisms in the power source.

2. Method according to Claim 1, **characterized in that** in the case of a rising voltage level of the feed power, said voltage level lying below the nominal value, the terminals (12, 12a,b,c, 13) are switched on in an order given by their priority, wherein the terminals having the highest priority are switched on first.

3. Method according to Claim 1 or 2, **characterized in that** each of the terminals (12, 12a,b,c, 13) is assigned a fixed voltage level value starting from which it stops operation in the case of the voltage level dropping or respectively commences operation in the case of the voltage level rising.

4. Method according to Claim 3, **characterized in that** the terminals (12, 12a,b,c, 13) monitor the present voltage level applied to them and stop operation if the voltage level drops below the voltage level value respectively assigned to them, or respectively commence operation if the voltage level exceeds the voltage level value respectively assigned to them.

5. Method according to any of Claims 1 to 4, **characterized in that** the terminals (12, 12a,b,c, 13) exchange data via an Ethernet, and **in that** the terminals (12, 12a,b,c, 13) are supplied with feed power via a feed bus (15), wherein the two unused core pairs of an eight-core Ethernet cable (14) are used for transmission.

6. Method according to Claim 5, **characterized in that** at least one of the terminals (13) is equipped with an internal voltage supply (19) having a predefined output voltage which is less than the nominal voltage level, and **in that** the internal voltage supply (19) is switched in if the voltage level of the feed power drops below the output voltage of the internal voltage supply (19).

7. Method according to Claim 6, **characterized in that** the nominal voltage level amount to approximately 48 V and the predefined output voltage of the internal voltage supply is approximately 45 V.

8. Data network for carrying out the method according to any of Claims 1 to 7, which data network (10, 20) comprises a plurality of terminals (12, 12a,b,c, 13) which exchange data among one another via a star- or mesh-networked data network, in particular an Ethernet, and at least one network node (11) and/or at least one of the terminals (13) that supplies the terminals (12, 12a,b,c, 13) with feed power at a predefined nominal voltage level via the data network, **characterized in that** a control (16) is implemented in the terminals (12, 12a,b,c, 13), **in that** the terminals (12, 12a,b,c, 13) are classified in classes having different priority levels, and **in that** the terminals (12, 12a,b,c, 13) are configured in such a way that they turn themselves off in an order given by their priority by means of the respective control (16) in the terminals (12, 12a,b,c, 13) in the case of the voltage level dropping below the nominal value with a falling voltage level, wherein the terminals (12, 12a,b,c, 13) having the lowest priority turn off first.

9. Data network according to Claim 8, **characterized in that** the terminals (12, 12a,b,c, 13) are configured in such a way that they switch themselves on in an order given by their priority in the case of a rising voltage level of the feed power, said voltage level lying below the nominal value, wherein the terminals having the highest priority switch themselves on first.

10. Data network according to Claim 8 or 9, **characterized in that** the terminals (12, 12a,b,c, 13) are supplied with feed power via a feed bus (15), wherein the two unused core pairs of an eight-core Ethernet cable (14) are used for transmission.

11. Data network according to any of Claims 8 to 10, **characterized in that** at least one of the terminals (13) is equipped with an internal voltage supply (19) having a predefined output voltage which is less than the nominal voltage level, and **in that** the internal voltage supply (19) is able to be switched on in addition if the voltage level of the feed power drops below the output voltage of the internal voltage supply (19) .

12. Data network according to any of Claims 8 to 11, **characterized in that** the terminals (12, 12a,b,c, 13) are data acquisition devices, in particular electricity meters.

## Revendications

1. Procédé permettant de faire fonctionner un réseau de données (10, 20) qui comprend une pluralité de terminaux (12, 12a,b,c, 13), lesquels terminaux échangent des données entre eux et sont alimentés en puissance d'alimentation à un niveau de tension nominal prédéfini par au moins un nœud de réseau (11) et/ou par au moins l'un des terminaux (13), **caractérisé en ce qu'**une unité de commande (16) est mise en œuvre dans les terminaux (12, 12a,b,c, 13), **en ce que** les terminaux (12, 12a,b,c, 13) sont rangés par classes avec des priorités d'importances différentes, et **en ce que** des terminaux identiques (12, 12a,b,c, 13) sont déconnectés par l'unité de commande (16) des terminaux (12, 12a,b,c, 13) selon une séquence définie par leur priorité lorsque le niveau de tension s'abaisse en-dessous de la valeur nominale, dans lequel les terminaux ayant la plus faible priorité sont déconnectés en premier lieu et dans lequel l'unité de commande respective (16) des terminaux (12, 12a,b,c, 13) est exempte de toute autre communication de données entre une source de puissance et les terminaux (12, 12a,b,c, 13) et est en outre exempte de mécanismes de commande supplémentaires dans la source de puissance.

2. Procédé selon la revendication 1, **caractérisé en ce que** les terminaux (12, 12a, b, c, 13) sont connectés lorsque le niveau de tension de la puissance d'alimentation croît tout en situant en-dessous de la valeur nominale selon une séquence définie par leur priorité, dans lequel les terminaux ayant la plus haute priorité sont connectés en premier.

3. Procédé selon la revendication 1 ou 2, **caractérisé en ce qu'**à chacun des terminaux (12, 12a,b,c, 13) est associée une valeur de niveau de tension fixe à partir de laquelle il cesse de fonctionner lorsque le niveau de tension diminue ou commence à fonctionner lorsque le niveau de tension croît.

4. Procédé selon la revendication 3, **caractérisé en ce que** les terminaux (12, 12a, b, c, 13) surveillent le niveau de tension actuel qui leur est appliqué et cessent de fonctionner lorsque le niveau de tension s'abaisse en-dessous de la valeur de niveau de tension qui leur est associée ou commencent à fonctionner lorsque le niveau de tension dépasse la valeur de niveau de tension qui leur est associée.

5. Procédé selon l'une des revendications 1 à 4, **caractérisé en ce que** les terminaux (12, 12a,b,c, 13) échangent des données par l'intermédiaire d'un Ethernet, et **en ce que** les terminaux (12, 12a,b,c, 13) sont alimentés en puissance d'alimentation par l'intermédiaire d'un bus d'alimentation (15), dans lequel les deux paires de fils non utilisées d'un câble Ethernet à 8 fils (14) sont utilisées pour la transmission.

6. Procédé selon la revendication 5, **caractérisé en ce qu'**au moins l'un des terminaux (13) est équipé d'une alimentation en tension interne (19) ayant une tension de sortie prédéfinie qui est inférieure au niveau de tension nominal, et **en ce que** l'alimentation en tension interne (19) est connectée lorsque le niveau de tension de la puissance d'alimentation s'abaisse en-dessous de la tension de sortie de l'alimentation en tension interne (19) .

7. Procédé selon la revendication 6, **caractérisé en ce que** le niveau de tension nominal est d'environ 48 V et **en ce que** la tension de sortie prédéfinie de l'alimentation en tension interne est d'environ 45 V.

8. Réseau de données pour la mise en œuvre du procédé selon l'une des revendications 1 à 7, lequel réseau de données (10, 20) comprend une pluralité de terminaux (12, 12a, b, c, 13) qui échangent des données entre eux par l'intermédiaire d'un réseau de données interconnecté en étoile ou maillé, notamment un Ethernet, ainsi qu'au moins un nœud de réseau (11) et/ou au moins l'un des terminaux (13) qui alimente en puissance d'alimentation les terminaux (12, 12a,b,c, 13) à un niveau de tension nominal prédéfini par l'intermédiaire du réseau de données, **caractérisé en ce qu'**une unité de commande (16) est mise en œuvre dans les terminaux (12, 12a,b,c, 13), **en ce que** les terminaux (12, 12a,b,c, 13) sont rangés par classes avec des priorités d'importances différentes, et **en ce que** les terminaux (12, 12a,b,c, 13) sont conçus de manière à ce qu'ils se déconnectent au moyen de l'unité de commande respective (16) des terminaux (12, 12a,b,c, 13) lorsque le niveau de tension s'abaisse en-dessous de la valeur nominale, le niveau de tension diminuant selon une séquence définie par leur priorité, dans lequel les terminaux (12, 12a,b,c, 13) ayant la plus faible priorité sont déconnectés en premier.

9. Réseau de données selon la revendication 8, **caractérisé en ce que** les terminaux (12, 12a, b, c, 13) sont conçus de manière à ce qu'ils se connectent lorsque le niveau de tension de la puissance d'alimentation croît tout en se situant en-dessous de la valeur nominale selon une séquence définie par leur priorité, dans lequel les terminaux ayant la plus haute priorité se déconnectent en premier.

10. Réseau de données selon la revendication 8 ou 9, **caractérisé en ce que** les terminaux (12, 12a,b,c, 13) sont alimentées en puissance d'alimentation par un bus d'alimentation (15), dans lequel les deux paires de fils non utilisées d'un câble Ethernet à 8 fils (14) sont utilisées pour la transmission.

11. Réseau de données selon l'une des revendications 8 à 10, **caractérisé en ce qu'**au moins l'un des terminaux (13) est équipé d'une alimentation en tension interne (19) ayant une tension de sortie prédéfinie qui est inférieure au niveau de tension nominal, et **en ce que** l'alimentation en tension interne (19) peut être connectée lorsque le niveau de tension de la puissance d'alimentation s'abaisse en-dessous de la tension de sortie de l'alimentation en tension interne (19) .

12. Réseau de données selon l'une des revendications 8 à 11, **caractérisé en ce que** les terminaux (12, 12a, b, c, 13) sont des dispositifs d'acquisition de données, en particulier des compteurs électriques.
